# FASCICULE DE BREVET EUROPEEN

(11) **EP 1 396 766 B1**
(45) Date de publication et mention de la délivrance du brevet: **02.12.2009**
(21) Numéro de dépôt: 02078630.7
(22) Date de dépôt: 04.09.2002
(51) Int. Cl.: G04G 1/04, G01C 5/06, B63C 11/32

(54) **Montre électronique de plongée à affichage analogique**
Elektronische Taucheruhr mit Analoganzeige
Electronic diver's watch with analog display

(43) Date de publication de la demande: 10.03.2004
(73) Titulaire: ASULAB S.A., 2074 Marin (CH)
(72) Inventeur: Germiquet, Christophe, 2515 Preles (CH); Berseth, Vincent, 1054 Morrens (CH); Born, Jean-Jacques, 1110 Morges (CH)
(74) Mandataire: Ravenel, Thierry Gérard Louis

(56) Documents cités:
- EP-A- 0 805 105
- US-A- 3 613 354
- US-A- 4 109 140

## Description

La présente invention concerne une montre électronique comportant des fonctions dédiées à la pratique de la plongée. Plus précisément, la montre de plongée selon la présente invention est du type comportant un boîtier étanche contenant un mouvement horloger surmonté d'un cadran, la montre comportant au moins des premières graduations correspondant à des indications horaires, ledit mouvement horloger comprenant des circuits électroniques susceptibles d'engendrer des signaux horaires à destination de moyens moteurs commandant au moins un premier et un second organes d'affichage analogiques, lesdits organes d'affichage analogiques étant disposés au-dessus du cadran pour afficher l'heure courante dans un premier mode de fonctionnement dit mode horaire, la montre comprenant en outre un capteur de pression susceptible de produire des signaux électriques représentatifs de la pression environnante et de fournir lesdits signaux auxdits circuits électroniques, la montre de plongée ayant au moins un second mode de fonctionnement dans lequel est prévu un affichage de données relatives à la pratique de la plongée.

Des produits similaires ont déjà été décrits dans l'art antérieur. Le brevet US 4,783,772, en particulier, décrit une montre électronique analogique dotée d'un capteur de pression lui permettant d'afficher des données relatives à la pratique de la plongée. Ces données, ainsi que des informations relatives à des fonctions supplémentaires telles qu'une alarme, par exemple, sont affichées sur un écran à cristaux liquides additionnel, disposé à douze heures sur le cadran de la montre susmentionnée. Toutefois, la nature des informations disponibles sur le produit décrit est limitée à des informations du type profondeur instantanée, durée de la plongée en cours, profondeur maximale atteinte. Par conséquent, l'exploitation de ces informations en termes de sécurité nécessite le recours à des tables de décompression indépendantes pour définir les paramètres de la remontée, notamment la détermination de la durée maximale pendant laquelle l'utilisateur peut rester en plongée avant de devoir effectuer au moins un palier de décompression. En outre, la lisibilité de l'écran à cristaux liquides est limitée du fait de ses faibles dimensions, en particulier dans les conditions d'une plongée.

Un premier but de la présente invention est de pallier les inconvénients susmentionnés de l'art antérieur en fournissant une montre de plongée indiquant à son utilisateur des informations relatives à sa sécurité lors de sa plongée.

Un autre but de l'invention est de proposer une montre de plongée permettant à son utilisateur de prendre connaissance des informations susmentionnées avec une grande facilité, autrement dit de réaliser une montre de plongée présentant une bonne lisibilité de ces informations.

Dans ce but, l'invention prévoit notamment une montre de plongée du type indiqué plus haut, caractérisée par le fait que l'affichage desdites données relatives à la pratique de la plongée est réalisé par au moins l'un desdits organes d'affichage analogiques en liaison avec lesdites premières graduations correspondant aux indications horaires, par le fait que lesdites données relatives à la plongée sont représentatives de la durée maximale restante pendant laquelle l'utilisateur de la montre peut poursuivre une plongée en cours avant de devoir effectuer un palier de décompression lors de la remontée et, par le fait que ledit premier organe d'affichage est agencé pour pouvoir en outre se déplacer dans le sens anti-horaire en regard desdites premières graduations pour indiquer ladite durée restante.

La plupart du temps, pour un plongeur occasionnel, la connaissance de la durée maximale restante avant de devoir effectuer un palier de décompression lors de la remontée est suffisante. Les profondeurs atteintes en plongée par ce type d'utilisateurs sont généralement limitées à 20 voire 30 mètres, ce qui permet de rester immergé pendant des durées raisonnables, de l'ordre de quelques dizaines de minutes, sans être forcé d'effectuer des paliers de décompression.

Ainsi, la montre de plongée selon l'invention constitue une alternative avantageuse, notamment du fait de sa simplicité, à l'utilisation de tables de décompression combinée à la lecture du temps écoulé sur une montre étanche de type conventionnel, pour effectuer des petites plongées. De plus, il est prévu de traiter les mesures effectuées par le capteur de pression sur la base d'un algorithme de décompression choisi parmi un ensemble d'algorithmes reconnus dans le milieu de la plongée. Ainsi, la durée maximale restante est calculée en prenant en compte les paramètres réels de la plongée en cours, comme c'est le cas avec un ordinateur de plongée de type conventionnel, ce qui est également plus précis que la méthode basée sur l'utilisation des tables de décompression.

En outre, on peut noter que dans la mesure où l'affichage de la donnée relative à la plongée est réalisé par un organe d'affichage utilisé en temps normal pour l'affichage de l'heure, une excellente lisibilité est assurée. En effet, la zone d'affichage de la montre de plongée selon la présente invention n'est pas encombrée par des organes d'affichage supplémentaires pour l'affichage des fonctions supplémentaires.

De manière générale, il est prévu d'utiliser des moyens, pour commander les mouvements respectifs des aiguilles des heures et des minutes, permettant des mouvements de rotation dans les deux sens de marche. Il est également prévu de recourir à des moyens pour activer, à partir du mode de fonctionnement horaire, un mode de fonctionnement plongée, de manière automatique. Il est bien entendu possible de recourir à une activation de type manuel de ce mode de fonctionnement, par exemple, par pression sur un poussoir.

Dans un premier mode de réalisation de la présente invention, il est prévu que, dans le mode plongée, des moyens calculent la durée maximale restante avant de devoir effectuer un palier de décompression lors de la remontée et, commandent l'aiguille des heures pour qu'elle affiche cette durée. Cette dernière est alors indiquée en relation avec des graduations de minutes prévues sur la montre pour le mode de fonctionnement horaire. En outre et de manière préférée, des moyens sont également prévus pour commander l'aiguille des minutes, dans ce mode de fonctionnement, pour qu'elle indique à chaque instant la profondeur instantanée à laquelle se trouve le porteur de la montre.

Dans une variante préférée, des secondes graduations sont portées par le cadran pour améliorer la lisibilité de la durée restante, du fait de leur proximité avec l'extrémité de l'aiguille des heures. Cette caractéristique permet en outre d'ajouter des indications spécifiques, telles qu'une première zone présentant une première couleur de fond, suivie d'une seconde zone de fin de graduations signalée par une couleur de fond différente, comme par exemple du orange. On peut prévoir une troisième zone rouge, positionnée à la suite de la seconde zone, permettant d'indiquer au plongeur qu'il doit attendre à quelques mètres de profondeur avant de remonter à la surface, dans le cas où il a dépassé la durée maximale restante avant de devoir effectuer un palier de décompression. Une telle configuration permet d'attirer l'attention du plongeur sur la fin proche de la plongée sans palier de décompression dans la seconde zone orange, pour lui indiquer de commencer la remontée sans tarder.

Dans un second mode de réalisation, des moyens supplémentaires sont prévus pour que la montre de plongée selon la présente invention indique, en plus de la durée maximale restante et lorsque cette dernière a atteint une valeur nulle, la durée d'un unique palier à effectuer à une profondeur prédéfinie, généralement fixée à 3 mètres. Une telle montre se destine donc à des plongées globalement plus profondes et plus longues que dans le cas du premier mode de réalisation. Ainsi, on prévoit également des secondes graduations circulaires, celles-ci étant subdivisées en au moins deux zones différentes, dont l'une présente une échelle de temps spécifique indiquant la durée de palier. L'échelle de temps spécifique couvre préférablement une durée maximale de palier de l'ordre de 20 minutes.

On peut également prévoir la mise en oeuvre de fonctions supplémentaires communes aux différents modes de réalisation. En particulier, on peut prévoir qu'en réponse à une pression sur un organe de commande, à partir du mode plongée, les aiguilles des heures et des minutes soient commandées pour afficher, respectivement, la durée écoulée de la plongée en cours et la profondeur maximale atteinte au cours de ladite plongée.

On peut aussi prévoir qu'en réponse à une pression sur un organe de commande, à partir du mode horaire, les aiguilles des heures et des minutes affichent respectivement la durée totale de la dernière plongée et la profondeur maximale atteinte au cours de celle-ci.

Il est également prévu de mettre en oeuvre un troisième mode de fonctionnement, ou mode de démonstration, accessible par pression d'un organe de commande à partir du mode de fonctionnement horaire. Dans le mode démonstration, des moyens peuvent être prévus pour permettre aux aiguilles des heures et des minutes de reproduire leur comportement de la dernière plongée à vitesse accélérée.

L'invention sera mieux comprise à l'aide de la description suivante de différents exemples d'exécution en référence aux dessins annexés, dans lesquels :
- la figure 1 est une vue de face de la montre de plongée selon un premier mode de réalisation de la présente invention;
- la figure 2 est un diagramme schématique général du circuit électronique de la montre de plongée selon la présente invention, et
- la figure 3 est une vue de face de la montre de plongée selon un second mode de réalisation de la présente invention.

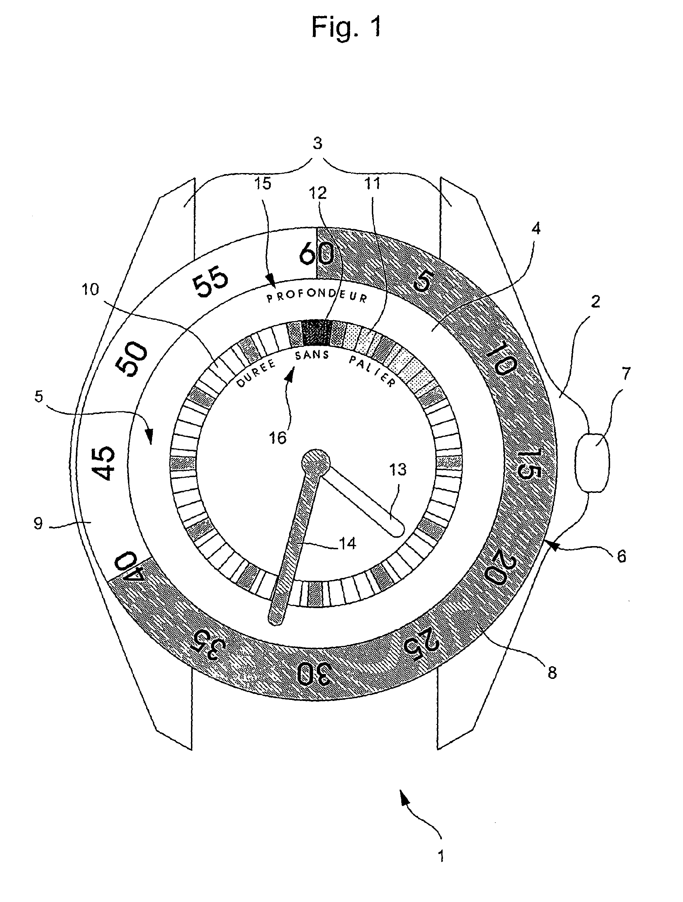

La figure 1 représente la montre de plongée selon la présente invention dans un mode de réalisation préféré très simple, à la fois du point de vue structurel et du point de vue de son fonctionnement. La montre 1 se présente en apparence comme une montre de type conventionnel. Celle-ci comporte, en effet, un boîtier 2 pouvant, par exemple, être du type fond-carrure moulé en matière plastique, comprenant des cornes 3 prévues pour l'attache d'un bracelet (non représenté) et contenant notamment un mouvement horloger (non représenté), un cadran 4 et fermé sur sa face supérieure par une glace 5, portant une lunette fixe 6 sur sa périphérie. La montre 1 comporte en outre un unique organe de commande 7, à savoir une tige-couronne, pouvant être utilisée en particulier en tant que poussoir en plus de son utilisation classique en rotation.

La lunette 6 porte des premières graduations de minutes s'étendant depuis une première indication de 5 minutes jusqu'à une dernière indication de 60 minutes, deux graduations successives étant espacées de 5 minutes. On note que les graduations sont subdivisées en deux portions adjacentes préférablement repérées par des couleurs différentes. La première portion 8 s'étend depuis la position douze heures jusqu'à la position 8 heures correspondant à la graduation 40 et, la seconde portion 9 s'étend depuis la graduation 40 jusqu'à la position douze heures.

Le cadran 4 porte des secondes graduations circulaires, dont l'unité est la minute, subdivisées en trois zones. La première zone 10 s'étend, dans le sens de rotation anti-horaire, depuis la position correspondant à la première graduation des 59 minutes jusqu'à la position correspondant à la première graduation des 10 minutes. La seconde zone 11 s'étend, dans le sens de rotation anti-horaire, depuis la fin de la première zone 10 jusqu'à la position correspondant à la première graduation 1 minute. La troisième zone 12, plus petite que les deux premières, s'étend entre les positions correspondant respectivement aux premières graduations 1 minute et 59 minutes dans le sens anti-horaire. Les première, seconde et troisième zones 10, 11 et 12 présentent également des couleurs respectives différentes.

La montre 1 comporte également deux aiguilles, respectivement, d'indication des heures 13 et des minutes 14. On peut également noter que les aiguilles des heures 13 et des minutes 14 présentent respectivement les mêmes couleurs que la première zone 10 des secondes graduations et que la première portion 8 des premières graduations.

Le cadran 4 porte des indications supplémentaires, données ici à titre d'exemple, en particulier le mot "profondeur" 15 disposé en périphérie du cadran, et l'expression "durée sans palier" 16, disposée directement à l'intérieur des secondes graduations. Ces indications supplémentaires 15 et 16 constituent donc quasiment les seuls indices apparents de la montre selon l'invention susceptibles de suggérer à un observateur que cette dernière présente des fonctionnalités supplémentaires par rapport à une montre conventionnelle.

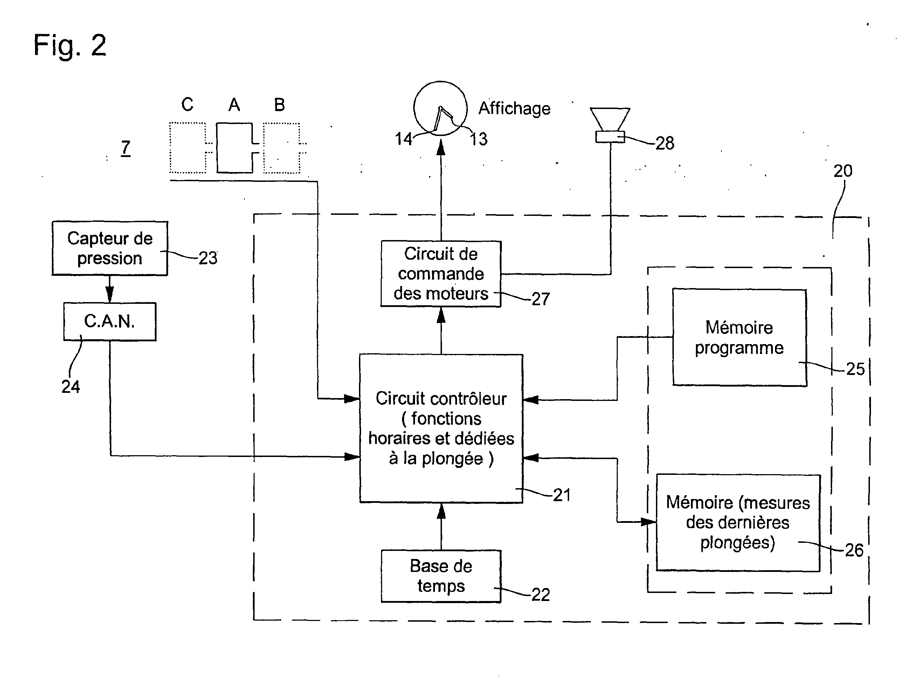

En effet, la montre 1 comporte des moyens techniques particuliers, qui seront rapidement décrits plus loin en relation avec la figure 2, lui permettant de fournir des indications vitales pour son porteur dans le cadre de la pratique de la plongée. Ces moyens techniques comprennent notamment un capteur de pression permettant de mesurer à chaque instant la pression de l'environnement extérieur à la montre et, convertir cette dernière valeur en profondeur dans le cadre de la plongée. Ces techniques ont été décrites dans de nombreux documents de l'art antérieur et ne seront pas abordées plus en détail par la suite.

Ainsi, par une programmation adéquate du circuit électronique de la montre selon la présente invention, il est prévu un premier mode de fonctionnement, ou mode horaire, dans laquelle les fonctions classiques sont assurées par les aiguilles des heures et des minutes. En outre, la tige-couronne 7 présente deux positions stables et une position instable, une première position stable étant la position au repos dans laquelle la tige-couronne ne remplit aucune fonction. De manière conventionnelle, la seconde position stable est une position tirée par rapport à la position de repos, dans laquelle la tige-couronne permet de régler, par rotation, l'indication de l'heure fournie par les deux aiguilles 13, 14. La position instable est atteinte par une pression sur la couronne en direction du boîtier 2 de la montre, un ressort (non représenté) étant prévu pour la repousser vers la position de repos lorsque la pression cesse, à la manière d'un bouton-poussoir. Chaque pression effectuée sur la tige-couronne 7 permet de commander la montre pour entraîner la modification de l'affichage en cours et pour afficher des informations dont la nature dépend de l'état de la montre 1 au moment de la pression.

Des moyens conventionnels sont prévus pour effectuer un changement de mode de fonctionnement automatique, en particulier pour passer du mode horaire à un second mode de fonctionnement, appelé mode plongée, lorsque débute une plongée. Ces moyens permettent inversement de revenir au mode horaire, de manière automatique, à partir du mode plongée lorsque le plongeur, porteur de la montre, refait surface. Dans ce but, on peut par exemple recourir à l'utilisation de deux contacts ohmiques (non représentés) dont chacun a une partie située à l'extérieur du boîtier 2 de la montre 1, cette partie externe entrant donc en contact avec l'eau lors d'une plongée. Ces deux contacts constituent ainsi un interrupteur, ouvert lorsque la montre 1 est en dehors de l'eau et fermé lorsqu'elle est immergée dans l'eau. La fermeture de cet interrupteur entraîne l'activation automatique du passage en mode plongée. Un autre mode de réalisation possible pour détecter une immersion de la montre consiste à disposer au moins une électrode dans la glace de la montre de façon à former un condensateur à capacité variable avec la surface supérieure de la glace permettant de détecter la présence d'eau sur la glace. On peut également imaginer l'exploitation des signaux fournis par le capteur de pression, soit de manière alternative par rapport à ce qui vient d'être décrit, soit en complément, pour enclencher ou déclencher le mode plongée. Dans ce cas, le circuit électronique de la montre peut être adapté pour activer le mode plongée en réponse à la détection d'une augmentation de la pression environnante au-delà d'une valeur prédéfinie.

Bien entendu, comme cela a été mentionné plus haut, il est possible de prévoir des moyens manuels d'activation du mode plongée de manière additionnelle ou alternative par rapport à l'activation automatique décrite ci-dessus. On peut notamment prévoir un organe de commande supplémentaire pour remplir cette fonction.

Ces moyens faisant partie de l'état de la technique, ils ne seront pas abordés davantage dans la présente demande de brevet, dans la mesure où ils ne constituent pas le coeur de la présente invention et où l'homme du métier ne rencontrera pas de difficulté particulière pour les mettre en oeuvre.

Une fois le mode plongée activé, les fonctions respectivement associées aux aiguilles des heures 13 et des minutes 14 sont l'affichage de la durée maximale restante pendant laquelle l'utilisateur de la montre 1 peut poursuivre une plongée en cours avant de devoir effectuer un palier de décompression lors de la remontée et l'affichage de la profondeur instantanée.

Ainsi, lorsque le plongeur entre dans l'eau, ce qui active le mode plongée, les deux aiguilles 13 et 14 se positionnent respectivement en regard de l'indication correspondant à 58 minutes portée par la lunette 6 et, à douze heures, autrement dit en regard de l'indication 60 minutes. Lorsque le plongeur descend, l'aiguille des minutes 14 se met à tourner pour indiquer la valeur de la profondeur instantanée en regard des premières graduations de minutes 8 et 9, tandis qu'initialement, l'aiguille des heures 13 reste immobile sur la position 58 minutes.

On note que la lisibilité de l'indication de la profondeur est excellente, notamment du fait que les couleurs de l'aiguille des minutes 14 et de la première portion 8 des premières graduations sont identiques. Cette similitude des couleurs facilite en effet une association intuitive de l'aiguille avec les graduations correspondantes. En outre, les graduations utilisées pour la lecture des profondeurs étant les mêmes que celles utilisées pour l'indication des minutes, le boîtier 2 de la montre n'est pas surchargé en indications inutiles facilitant encore l'accessibilité aux informations fournies.

On peut également noter que la seconde portion 9 des premières graduations débutant à l'indication 40 mètres (ou minutes) est préférablement de couleur différente de celle de la première portion 8, pour fournir une information supplémentaire au plongeur concernant sa sécurité. En effet, au-delà d'une profondeur de 40 mètres, la durée maximale restante sans avoir à effectuer un palier lors de la remontée diminue très rapidement en-dessous de 10 minutes et, nécessite donc une attention plus soutenue de la part du plongeur. La configuration qui vient d'être décrite permet donc au plongeur d'être averti d'un "coup d'oeil" d'un éventuel dépassement de cette limite, donc qu'il se trouve dans une situation plus sensible que de coutume.

La valeur de la durée maximale restante peut être calculée à partir de divers algorithmes obtenus suite à de nombreuses études médicales ayant porté sur les phénomènes de décompression des gaz dans l'organisme humain. Le choix de l'algorithme ne présente pas beaucoup d'importance ni pour la compréhension de la présente invention, ni pour sa mise en oeuvre par l'homme du métier, qui pourra choisir un algorithme parmi les plus récents généralement reconnus dans le milieu de la plongée. De manière générale, la durée maximale dépend du niveau de pression auquel est exposé l'organisme du plongeur, ainsi que de la durée de l'exposition. Cette durée restante diminue donc plus rapidement lorsque la profondeur à laquelle se trouve le plongeur augmente. On peut noter qu'en outre la valeur de la durée maximale restante dépend de paramètres supplémentaires tels que, notamment, "l'histoire" récente du plongeur, à savoir le fait qu'il ait récemment effectué une ou plusieurs plongées, ou encore l'altitude de la surface, dans le cas d'une plongée effectuée dans un lac d'altitude par exemple.

Des moyens sont prévus dans les circuits électroniques de la montre pour prendre en compte l'ensemble de ces paramètres et, calculer la durée maximale restante à partir de l'algorithme retenu pour la programmation de la montre.

En particulier, un avantage supplémentaire de la montre selon la présente invention, notamment par rapport aux ordinateurs de plongée, provient de son esthétique simple permettant à son utilisateur de la porter en dehors de la pratique de la plongée. Ainsi, l'histoire récente de l'utilisateur du point de vue de la plongée est prise en compte dans les calculs de la durée maximale restante.

Lorsque l'organisme de l'utilisateur n'a pas subi de surpression récente, son état de saturation est nul, autrement dit son organisme ne présente pas de modification physiologique du point de vue de la pratique de la plongée. Dans ce cas, lorsque l'utilisateur débute une plongée, la valeur de la durée maximale restante est de l'ordre de quelques heures tant que l'utilisateur ne dépasse pas une profondeur de l'ordre d'une dizaine de mètres. Plus le plongeur descend, plus la valeur de la durée maximale restante diminue rapidement jusqu'à atteindre 58 minutes. A partir de ce moment, l'aiguille des heures 13 se met à tourner dans le sens anti-horaire pour indiquer cette valeur à chaque instant, en regard des graduations de minutes.

Ainsi, on comprend bien de manière générale lorsque la durée restante est inférieure à 58 minutes, que l'aiguille des heures 13 tourne à vitesse constante, à raison d'un pas de graduations par minute, tant que le plongeur reste à une profondeur donnée et qu'elle tourne à plus d'un pas par minute lorsque le plongeur descend. D'autre part, lorsque le plongeur remonte, la durée maximale restante augmente du fait que la pression dans l'environnement du plongeur diminue, ce qui a pour conséquence que l'aiguille des heures 13 se met à tourner dans le sens horaire.

Conformément à ce qui a été décrit plus haut, le cadran 4 porte des secondes graduations circulaires 10, 11 et 12 permettant d'améliorer la lisibilité de la montre 1 selon la présente invention. En particulier, il est prévu d'utiliser la même couleur pour la première zone 10 des secondes graduations que pour l'aiguille des heures 13 pour faciliter une association intuitive de ces deux éléments au moment de la lecture de la durée restante. En outre, la seconde zone 11 des secondes graduations, qui correspond à une durée restante inférieure à 10 minutes, est préférablement de couleur orange pour attirer l'attention du plongeur lorsque l'aiguille des heures 13 pénètre dans ce domaine. De même, la troisième zone 13 est préférablement rouge pour signaler au plongeur que la durée restante est écoulée et l'avertir qu'il risque de rencontrer des problèmes de décompression en cas de remontée directe jusqu'en surface.

On peut noter l'excellente lisibilité de la montre de plongée 1 selon la présente invention, car l'affichage est sobre et ne fait que reprendre une structure éprouvée depuis plusieurs siècles, à savoir un système d'affichage analogique, préférablement par aiguille, bien que l'utilisation de disques tournants portant des index reste envisageable. Ainsi, il ne faut que très peu de temps au plongeur lorsqu'il consulte sa montre pour savoir dans quelle situation il se trouve par rapport à la plongée en cours. En effet, la lecture de la durée restante en minutes est intuitive puisqu'elle est similaire à la lecture des minutes en mode horaire.

Des fonctionnalités supplémentaires sont également prévues sur la montre de plongée 1 et sont accessibles par pression de la tige-couronne 7. La nature des fonctions accessibles et la façon d'y accéder sont fournies à titre d'exemples non limitatifs.

Des moyens sont prévus pour commander les aiguilles des heures 13 et des minutes 14 en réponse à une pression sur la tige-couronne 7 à partir du mode plongée, de telle manière qu'elles affichent respectivement la durée écoulée de la plongée et la profondeur maximale atteinte pendant la plongée en cours. On peut alors prévoir un retour automatique au mode plongée après un intervalle de temps de quelques secondes. On peut également prévoir que le retour en mode plongée est obtenu par une nouvelle pression sur la tige-couronne 7.

D'autre part, des moyens additionnels sont prévus pour commander les aiguilles des heures 13 et des minutes 14 en réponse à une pression sur la tige-couronne 7 à partir du mode horaire, de telle manière qu'elles affichent respectivement la durée totale et la profondeur maximale atteinte lors de la dernière plongée effectuée. On peut alors prévoir un retour au mode horaire automatique ou obtenu par une nouvelle pression sur la tige-couronne 7. De même, on peut prévoir que le circuit électronique de la montre 1 comporte des zones mémoires en nombre suffisant pour mémoriser les paramètres, à savoir durée totale et profondeur maximale, des cinq dernières plongées, par exemple. Dans ce cas, on peut par exemple prévoir qu'une pression longue sur la tige-couronne 7, à partir du mode horaire, entraîne le passage en mode d'affichage des paramètres des dernières plongées, le choix de la plongée étant effectué par des pressions courtes successives sur la tige-couronne 7 et, le retour au mode horaire étant préférablement automatique ou obtenu par une nouvelle pression longue sur la tige-couronne 7. Dans ce dernier cas de figure, on peut également prévoir des moyens pour commander les aiguilles 13 et 14 pour qu'elles se superposent en regard des graduations 8 et 9 pendant une durée prédéfinie, de l'ordre de quelques secondes, de manière à indiquer le numéro de la plongée dont les paramètres sont affichés automatiquement après la durée prédéfinie.

On peut encore prévoir que dans le cas d'une mémorisation des paramètres de la ou des dernières plongées, une nouvelle action sur la tige-couronne 7 active un mode de fonctionnement supplémentaire, appelé mode de démonstration. On peut indifféremment programmer la montre pour que cette dernière activation se fasse en réponse à une nouvelle pression longue à partir du mode d'affichage des paramètres des dernières plongées, ou encore en réponse à une double pression à partir du mode horaire, par exemple. Pour la mise en oeuvre de ce mode de démonstration, des moyens sont prévus pour commander les aiguilles des heures 13 et des minutes 14, de telle manière qu'elles reproduisent à vitesse accélérée le comportement qu'elles ont respectivement présenté lors de la plongée précédemment sélectionnée. On peut, par exemple, programmer le circuit électronique de la montre pour qu'une minute de la dernière plongée soit reproduite en une seconde dans le mode de démonstration.

Le mode de démonstration présente un intérêt majeur en matière de sécurité, car il permet de visualiser rapidement le profil de la plongée sélectionnée qui constitue une information extrêmement importante pour un médecin appelé suite à un accident de plongée. Habituellement, un médecin peut effectuer la visualisation du profil de plongée par transfert de données à partir d'un ordinateur de plongée sur un terminal de lecture et d'exploitation, éventuellement du type ordinateur personnel. Le mode de démonstration selon la présente invention procure un avantage sur les dispositifs appartenant à l'état de la technique en termes de rapidité d'accès à ces informations. En outre, les avantages exposés plus haut, concernant la lisibilité de la montre de plongée 1 selon l'invention, s'appliquent également à l'utilisation du mode de démonstration. La visualisation du profil de la plongée sélectionnée est en effet assez aisée à partir de l'observation du déplacement des aiguilles 13 et 14 en vitesse accélérée.

D'autre part, on peut également prévoir une adaptation des échelles de temps et de profondeur en fonctions des valeurs respectives de la durée et de la profondeur de la plongée reproduite. Une telle disposition permet d'afficher, avec une bonne lisibilité, les paramètres relatifs à une plongée en apnée, par exemple. Dans ce dernier cas, on peut programmer la montre selon l'invention pour que la démonstration se fasse en temps réel et pour qu'une variation de profondeur de 1 mètre soit représentée par une variation de 10 minutes sur son cadran. Bien entendu, ces valeurs ne sont données ici qu'à titre indicatif et l'homme du métier est capable de les modifier sans faire face à des difficultés particulières.

La figure 2 est un diagramme schématique de la structure générale du circuit électronique de la montre de plongée selon la présente invention.

De manière générale, le circuit électronique de la montre comprend notamment un circuit intégré 20 comportant un circuit contrôleur 21 susceptible de gérer les fonctions horaires conventionnelles de la montre 1 comprenant, dans ce but, un circuit de division du temps et relié notamment à un résonateur 22 fournissant une base de temps. A partir de cette base de temps, des informations temporelles sont produites par le circuit contrôleur 21, notamment pour assurer les fonctions du mode horaire et les fonctionnalités relatives au mode plongée.

En outre, le circuit contrôleur 21 reçoit en entrée des signaux générés par un capteur de pression 23 générant des signaux électriques analogiques représentatifs de la pression environnante. Ces signaux transitent par un convertisseur analogique-numérique 24 avant d'être fournis en entrée du circuit contrôleur 21, sous la forme d'un signal digital.

Le capteur de pression 23 est de type conventionnel et l'homme du métier ne rencontrera pas de difficulté particulière pour en choisir un qui soit adapté à la mise en oeuvre de la présente invention.

Le circuit intégré 20 comporte également des zones de mémoire, notamment une première zone de mémoire 25, préférablement de type non volatile, contenant un programme permettant au circuit contrôleur 21 d'effectuer les calculs relatifs au mode plongée, sur la base d'un algorithme de décompression. Le choix d'une mémoire non volatile reprogrammable (Flash ou EPROM, par exemple) permet éventuellement de modifier ultérieurement le programme de calcul en fonction de l'algorithme de décompression retenu. Le circuit intégré 20 comporte de manière préférée au moins une seconde zone de mémoire 26, également de type non volatile, dans laquelle les mesures ainsi que les résultats des calculs effectués par le circuit contrôleur 21 sont stockés périodiquement. Cette seconde zone de mémoire 26 est notamment prévue pour stocker les mesures de profondeur et les mesures temporelles correspondantes relatives à la ou aux dernières plongées, le cas échéant. Ainsi, ces informations sont consultées par le circuit contrôleur 21, en particulier lorsque la montre est dans le mode de démonstration.

A partir de ces signaux d'entrée respectifs, le circuit contrôleur 21 détermine la situation et l'état du plongeur à chaque instant, du point de vue de la pratique de la plongée. Dans ce but, on peut notamment prévoir qu'en mode horaire, une mesure de pression est effectuée toutes les cinq minutes et qu'en mode plongée, une mesure de pression est effectuée toutes les deux secondes, par exemple. A partir de toutes ces mesures périodiques et sur la base du programme stocké dans la première zone de mémoire 25, le circuit contrôleur 21 détermine un certain nombre de paramètres pertinents pour la santé du plongeur, c'est-à-dire en particulier, le taux résiduel d'azote dissout dans son organisme et la quantité de micro-bulles formées.

L'algorithme de décompression est préférablement enregistré dans la première zone de mémoire 25, sous forme d'un programme informatique. Son exploitation, sur la base des informations mesurées et/ou calculées permet au circuit contrôleur 21 de calculer la valeur de la durée maximale restante pour la plongée en cours, avant que le plongeur soit obligé d'effectuer un palier de décompression lors de la remontée. Le circuit contrôleur 21 envoie alors des signaux adaptés à un circuit de commande 27 des moteurs bi-directionnels, de telle manière que l'aiguille des heures 13 affiche la durée restante, le cas échéant, c'est-à-dire si cette durée est inférieure à 58 minutes. De même, le circuit contrôleur 21 produit des signaux adaptés pour le circuit de commande 27 des moyens moteurs, par exemple deux moteurs bi-directionnels, de telle manière que l'aiguille des minutes 14 affiche la profondeur instantanée, en regard des graduations de minutes 8 et 9 portées par la lunette 6 de la montre.

Dans une variante préférée, on prévoit le présence d'une alarme qui peut être visuelle ou, préférablement, sonore et dont la fonction est de prévenir le plongeur lorsque la durée maximale restante prend une valeur faible, par exemple de l'ordre de deux minutes. Ainsi, à partir du déclenchement de cette alarme, le plongeur sait qu'il doit surveiller l'évolution de la durée maximale restante avec une grande attention, voire qu'il doit commencer à remonter pour assurer sa sécurité. Pour mettre en oeuvre l'alarme, il est prévu un vibreur acoustique, ou autrement dit un buzzer 28, de type conventionnel tel qu'un élément piézoélectrique, commandé par le circuit contrôleur 21. Ces points ne seront pas davantage développés ici dans la mesure où la mise en oeuvre de l'alarme est conventionnelle et ne posera pas de difficulté particulière à l'homme du métier.

Il est possible que le plongeur effectue deux plongées ou plus dans des intervalles de temps inférieurs à l'intervalle de temps physiologiquement nécessaire pour qu'une plongée précédente soit sans influence sur les plongées suivantes. Dans ce cas, il faut prendre en compte la ou les plongées précédentes dans le calcul du temps nécessaire notamment à l'élimination de l'azote résiduel dans l'organisme du plongeur, lors de la plongée ultérieure.

Dans la mesure où il est prévu que le capteur de pression 23 effectue des mesures de la pression environnante de manière périodique et en permanence, que l'utilisateur de la montre soit en plongée ou en surface, les données fournies au circuit contrôleur 21 pour effectuer les calculs sur la base de l'algorithme de décompression sont suffisantes pour assurer une bonne précision des résultats. Ainsi, les plongées éventuellement réalisées de manière rapprochée sont également prises en compte pour calculer la durée maximale restante avant de devoir effectuer un palier de décompression. De même, si l'utilisateur de la montre se rend en altitude pour plonger en lac, il subit des pressions environnantes faibles et se trouve dans une phase de désaturation progressive. Ainsi, dans un premier temps, son état physiologique non complètement adapté à la pression environnante est pris en compte par la montre selon la présente invention en tant qu'état initial, puisque les mesures prises pendant cette courte période d'ascension par le capteur de pression 23 sont également intégrés dans l'utilisation du programme de la montre, l'algorithme utilisé prenant de tels paramètres en charge.

De ce fait, un avantage supplémentaire de la montre de plongée selon l'invention apparaît du fait de son esthétique. En effet, du fait de la discrétion de sa présentation, ce qui n'est généralement pas le cas des ordinateurs de plongée, la présente montre peut être portée en toute circonstance et donc en permanence. Ainsi, son utilisateur n'est pas obligé d'anticiper une plongée à venir pour porter la montre, dans le but d'assurer un suivi des pressions subies avant de plonger, dans la mesure où il peut la porter en permanence sans faire aucune concession d'ordre esthétique.

D'autre part, le circuit électronique de la montre comporte des moyens conventionnels (non représentés) pour détecter des pressions effectuées par l'utilisateur sur la tige-couronne 7. Cette dernière se trouve en position A au repos et présente deux positions extrêmes B et C. La position B, instable, obtenue par une pression de l'utilisateur active une fonction du circuit contrôleur 21 modifiant le mode de fonctionnement de la montre, tel que décrit plus haut. Lorsque la tige-couronne 7 est enfoncée en position B à partir du mode horaire, le circuit contrôleur 21 génère des signaux, à destination du circuit de commande 27 des moteurs, de telle manière que les aiguilles des heures 13 et des minutes 14 affichent respectivement la durée totale et la profondeur maximale de la dernière plongée. En outre, conformément à ce qui a été décrit précédemment, on peut prévoir une activation du mode démonstration par une pression longue en position B de la tige-couronne 7, à partir du mode d'affichage des paramètres de la dernière plongée, ou par une pression double à partir du mode horaire. D'autre part, lorsque la tige-couronne 7 est enfoncée en position B à partir du mode plongée, le circuit contrôleur 21 génère des signaux, à destination du circuit de commande 27 des moteurs, de telle manière que les aiguilles des heures 13 et des minutes 14 affichent respectivement la durée écoulée et la profondeur maximale atteinte depuis le début de la plongée en cours.

Bien entendu, l'homme du métier est capable de programmer comme il le souhaite le circuit intégré 20 de la montre selon la présente invention, pour prévoir des réponses respectives adaptées aux différentes actions possibles sur la tige-couronne 7.

En outre, des moyens conventionnels bien connus de l'homme du métier sont mis en oeuvre pour permettre un ajustage de l'heure courante indiquée par les aiguilles 13 et 14, en mode horaire, lorsque la tige-couronne 7 est tirée dans la position stable C.

D'autre part, on peut noter qu'en pratique, toute plongée doit normalement comporter un palier, appelé palier de confort ou de sécurité, à une profondeur de quelques mètres et pendant quelques minutes, généralement 5 mètres pendant 3 minutes, même en l'absence de risques liés au phénomène de décompression.

Selon le mode de réalisation qui vient d'être décrit, le plongeur peut, lorsqu'il effectue sa remontée, s'arrêter à une profondeur prédéfinie, 5 mètres par exemple, et presser la tige-couronne 7 pour visualiser la durée écoulée depuis le début de la plongée en cours. Il ne lui reste alors qu'à presser la tige-couronne 7 de temps à autre pendant la durée souhaitée pour le palier de sécurité, par exemple 3 minutes, pour attendre de refaire surface.

On peut prévoir, dans une variante de réalisation, des moyens pour afficher un compte à rebours de durée prédéfinie, de l'ordre de 3 minutes, à partir du moment où le plongeur est remonté à une profondeur prédéfinie, préférablement d'environ 5 mètres. On peut, par exemple, prévoir que si le plongeur reste pendant plus de 10 secondes à 5 mètres, avec une certaine tolérance sur la valeur de la profondeur, le circuit contrôleur 21 active automatiquement un mode d'affichage de compte à rebours. Dans le mode de compte à rebours, la fonction de l'aiguille des minutes 14 resterait inchangé par rapport au mode plongée, tandis que l'aiguille des heures 13 indiquerait le temps restant avec pour valeur initiale 2 minutes et 50 secondes. On peut prévoir dans ce cas qu'un tour de cadran 4 correspond à 3 minutes et donc, que l'aiguille des heures 13 part d'une position située entre 55 et 60 minutes pour tourner dans le sens anti-horaire, en continu ou par pas de 5 secondes par exemple.

Bien entendu, les valeurs numériques fournies ci-dessus l'ont été de manière non limitative pour illustrer le fonctionnement de la montre selon l'invention.

La structure du circuit électronique de la montre de plongée 1 selon la présente invention ne sera pas abordée plus en détail dans la mesure où elle ne constitue pas le coeur de l'invention. En outre, de nombreux exemples de réalisation sont disponibles dans des documents de l'art antérieur et l'homme du métier n'aura aucun mal à s'en procurer.

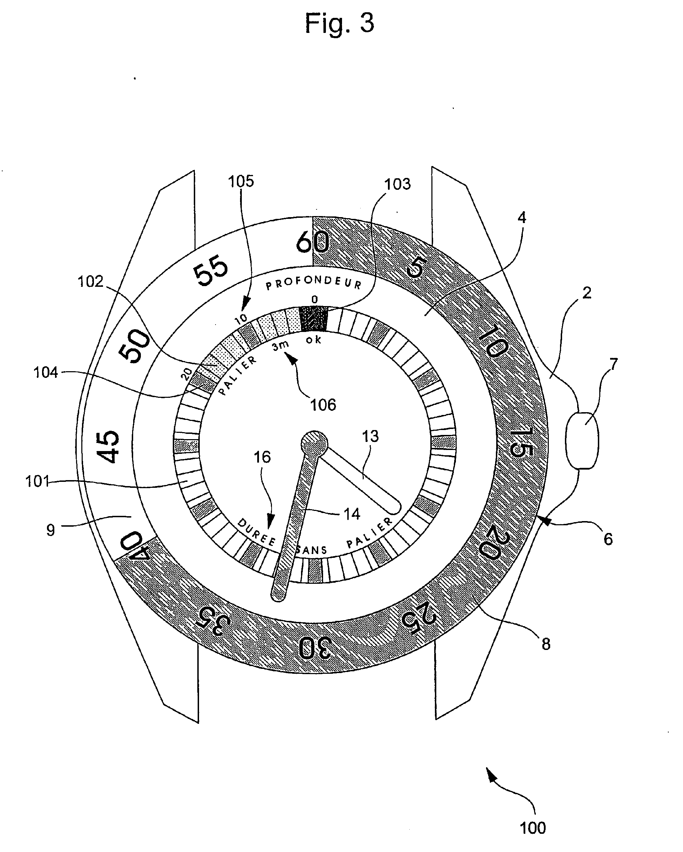

La figure 3 présente un second mode de réalisation de la montre de plongée 100 selon la présente invention, pour lequel un grand nombre d'éléments techniques sont en commun avec le premier mode de réalisation. Les références numériques utilisées pour la description détaillée du premier mode de réalisation sont conservées pour les éléments repris à l'identique dans le second mode de réalisation.

L'allure générale de la montre de plongée 100 selon le second mode de réalisation est la même que dans le mode de réalisation précédent, les différences se situant au niveau des secondes graduations portées par le cadran 4.

En effet, la montre de plongée 100 est destinée à un type de plongeurs susceptibles d'effectuer des plongées sans palier ou avec un palier unique, préférablement fixé à 3 mètres de profondeur. En particulier, on peut choisir de limiter l'utilisation de la montre 100 à des plongées au cours desquelles serait nécessaire un palier de décompression à 3 mètres pendant au maximum 20 minutes, par exemple, les possibilités de plongées restant intéressantes dans ce cas.

Par conséquent, dans le second mode de réalisation de la montre de plongée, les secondes graduations portées par le cadran 4 comportent une première zone 101 indiquant la durée maximale restante et une seconde zone 102 indiquant la durée du palier à effectuer à 3 mètres de profondeur. Dans la variante représentée sur la figure 3, les secondes graduations comportent également une troisième zone 103, centrée sur la position correspondant à l'indication 60 minutes des premières graduations 8, 9 et, s'étendant sur un secteur correspondant à 2 minutes. Cette troisième zone 103 est une zone neutre dont la fonction sera mieux expliquée plus loin.

Le fond de la première zone 101 est préférablement réalisé de la même couleur que l'aiguille des heures 13 pour les raisons exposées précédemment, tandis que la seconde zone 102 est préférablement réalisée sur un fond rouge. En ce qui concerne la troisième zone 103, on peut utiliser une troisième couleur pour colorer son fond, préférablement du vert.

On constate que, pour permettre l'indication de la durée maximale restante par l'aiguille des heures 13 en relation avec les indications de minutes portées par la lunette 6, la première zone 101 des secondes graduations s'étend entre une première position 104 arbitraire et la position correspondant à 1 minute dans le sens anti-horaire. Dans la variante représentée ici, la première position 104 correspond à celle de l'indication 50 minutes. Ainsi, la seconde zone 102 des graduations s'étend, dans le sens anti-horaire, entre les positions 59 et 50 minutes. Des indications supplémentaires 105 ont été portées sur le cadran 4 en regard de la seconde zone 102 des graduations pour indiquer que cette dernière est susceptible d'afficher des durées allant de 0 à 20 minutes, une indication étant prévue par pas de 5 minutes. De même, une indication "Palier 3m", 106, a été ajoutée à l'intérieur de la seconde zone 102 des secondes graduations pour en préciser la fonction à l'utilisateur de la montre 100.

Préférablement, la montre de plongée 100 fonctionne de la manière suivante. Lorsque le plongeur entre dans l'eau, la montre 100 passe automatiquement du mode horaire au mode plongée, les aiguilles des heures 13 et des minutes 14 passant de l'affichage de l'heure à l'affichage, respectivement, de la durée maximale restante et de la profondeur instantanée. Initialement, la durée maximale restante présente une valeur très grande, en tout cas supérieure à 50 minutes. De même que dans le mode de réalisation précédent, l'aiguille des heures 13 se place sur la position 49 minutes, c'est-à-dire à proximité de la troisième zone 103 des secondes graduations dans ce cas, et reste immobile tant que la durée restante est supérieure à 49 minutes.

Lorsque le plongeur descend à une profondeur suffisante, tel qu'expliqué précédemment, à partir d'une certaine durée de plongée et en fonction des profondeurs atteintes, la durée maximale restante diminue progressivement jusqu'à 49 minutes. A cet instant, l'aiguille des heures 13 se met en mouvement pour indiquer la durée maximale restante, de manière exacte, par une rotation dans le sens anti-horaire en regard des indications de minutes portées par la lunette 6 et des secondes graduations 101.

Au-delà d'une certaine durée de plongée, un palier de décompression s'avère nécessaire. Dans ce cas, l'aiguille des heures 13 saute directement de l'indication 1 minute restante sans palier de décompression à l'indication de la durée du palier à effectuer affichée en regard des indications supplémentaires 105 de la seconde zone 102 des secondes graduations. Tant que le plongeur reste à une profondeur suffisante, l'aiguille des heures 13 tourne dans le sens anti-horaire pour afficher l'augmentation de la durée du palier correspondante. On peut noter que la durée du palier à effectuer à 3 mètres calculée sur la base de l'algorithme de décompression correspond, préférablement et à chaque instant, à la durée du palier à effectuer par le plongeur s'il remontait à partir de cet instant à une vitesse prédéfinie, généralement de l'ordre de 10 mètres par minute, jusqu'à la profondeur de 3 mètres.

Lors de la remontée, lorsque le plongeur atteint 3 mètres de profondeur, l'aiguille des heures 12 tourne à vitesse sensiblement constante pour afficher une sorte de compte à rebours de la durée du palier à effectuer. En réalité, si la profondeur effective à laquelle se trouve le plongeur pendant le palier de décompression fluctue, ce qui est détecté par le capteur de pression 23, le calcul de la durée du palier tient compte de ces fluctuations pour réaliser des mises à jour quasiment en temps réel de la durée de palier restante. Il est préférablement prévu, qu'en fin de palier de décompression, l'aiguille des heures 13 saute dans la troisième zone 103 des secondes graduations pour indiquer au plongeur que son palier est terminé et qu'il peut refaire surface.

Ainsi, le positionnement de l'aiguille des heures 13 sur la troisième zone 103, ou zone neutre, confirme à l'utilisateur de la montre 100 qu'il n'a plus de palier de décompression à effectuer à la remontée.

On peut omettre l'utilisation de la troisième zone 103 dans une variante de réalisation, en prévoyant qu'en fin de palier de décompression l'aiguille des heures 13 recommence à indiquer la valeur de la durée restante avant de devoir effectuer un nouveau palier de décompression en regard de la première zone 101 des secondes graduations. Ainsi, le plongeur sait combien de temps il peut encore rester immergé après avoir effectué la palier de décompression, la nouvelle durée restante affichée étant, bien entendu, actualisée en temps réel en fonction de la profondeur d'évolution du plongeur.

De manière générale et de même que dans le premier mode de réalisation, l'algorithme utilisé prend en compte les cas de plongées successives ainsi que l'altitude de surface du plan d'eau dans lequel est effectué la plongée et, des moyens sont en outre prévus pour permettre l'affichage des données relatives à la plongée en réponse à une pression sur la tige-couronne 7 à partir du mode plongée, pour permettre l'affichage des données relatives à la dernière plongée à partir du mode horaire et pour permettre l'activation d'un mode de démonstration.

En outre, on peut prévoir des moyens pour permettre un affichage du suivi du palier de sécurité à 5 mètres tel que décrit plus haut. Ainsi, même dans le cas où aucun palier de décompression n'est à effectuer lors de la remontée, on peut prévoir que lorsque le plongeur remonte à une profondeur voisine de 5 mètres pendant 10 secondes, par exemple, l'aiguille des heures 13 saute directement en regard de l'indication supplémentaire 105 correspondant à un temps de palier de 3 minutes. L'aiguille des heures tourne alors dans le sens horaire jusqu'à la fin des 3 minutes, au-delà desquelles elle se replace dans la zone neutre 103 des graduations pour indiquer au plongeur qu'il peut refaire surface en toute sécurité.

Le diagramme schématique précédemment décrit en relation avec le mode de réalisation précédent et la figure 2 est également valable pour le présent mode de réalisation. Les éléments fonctionnels du circuit électronique sont en effet communs aux deux modes de réalisation décrits.

Dans une variante de réalisation, on peut ménager la fin de la seconde zone 102 des secondes graduations, entre les positions correspondant à 50 et 51 minutes, pour qu'elle se distingue du reste de la zone 102, par une couleur différente ou l'ajout d'un symbole particulier, par exemple. Ainsi, le plongeur est facilement averti du fait que la durée du palier de décompression qu'il devra effectuer lors de sa remontée risque d'être trop importante, voire qu'un second palier de décompression à 6 mètres de profondeur devienne nécessaire.

Comme décrit plus haut en relation avec le premier mode de réalisation, il est prévu dans le présent mode de réalisation d'équiper la montre d'une alarme, préférablement sonore. L'alarme comporte ici deux modes de fonctionnement auxquels sont préférablement associées deux fréquences sonores respectives différentes ou encore deux séquences de signaux respectives différentes. En effet, on peut prévoir un premier mode de fonctionnement de l'alarme lors d'une première phase de plongée, à savoir lorsque la durée maximale restante n'est pas encore nulle. Dans ce cas, le fonctionnement est similaire à celui décrit en relation avec le premier mode de réalisation, c'est-à-dire qu'un signal sonore émis à une première fréquence ou suivant une première séquence avertit le plongeur que la durée restante a franchi un seuil prédéfini. On peut en outre prévoir un second mode de fonctionnement lors d'une seconde phase de plongée, à savoir lorsqu'un palier de décompression est nécessaire lors de la remontée et que cette dernière n'a pas encore commencé. Dans ce cas, lorsque les paramètres de la plongée en cours sont tels que la nécessité d'effectuer un palier à 6 mètres de profondeur est imminente, par exemple inférieure à 2 minutes, le circuit contrôleur 21 commande le buzzer 28 pour qu'il émette un signal sonore à une seconde fréquence ou suivant une seconde séquence pour avertir le plongeur du risque encouru. On peut également prévoir dans une telle situation, éventuellement de manière alternative, préférablement de manière complémentaire, que l'aiguille des heures 13 se positionne directement en fin de la seconde zone 102 lorsque les paramètres de la plongée en cours sont tels que la nécessité d'effectuer un palier à 6 mètres de profondeur est imminente. Ainsi, le plongeur sait qu'il doit remonter sans délai, l'aiguille des heures 13 reprenant sa fonction initiale d'indication de la durée du palier une fois le danger écarté, c'est-à-dire lorsque la durée restante avant de devoir effectuer un palier à 6 mètres a repris une valeur raisonnable.

La description qui précède correspond à des modes de réalisation préférés de l'invention qui est définie par les revendications, et ne saurait en aucun cas être considérée comme limitative, en ce qui concerne plus particulièrement la structure décrite pour la montre, les fonctions décrites, la nature et le nombre des organes de commande utilisés, les couleurs retenues ou encore l'emplacement des graduations. Plus particulièrement, en ce qui concerne l'ergonomie de l'affichage en mode plongée, on constate que l'association entre une aiguille donnée et une zone d'affichage spécifique au moment de la lecture est facilitée lorsque leurs apparences respectives sont similaires, le choix de couleur identique, tel que décrit dans la présente demande, en constituant un exemple de réalisation non limitatif. On peut notamment prévoir en outre un éclairage du cadran ou imaginer une variante de réalisation comportant une aiguille des secondes, par exemple. De même, l'invention n'est pas limitée aux modes de fonctionnements décrits ainsi qu'aux passages possibles d'un mode à l'autre tels que décrits, dans la mesure où ces paramètres sont modifiables par une programmation adéquate du circuit contrôleur. L'homme du métier ne rencontrera pas de difficulté particulière pour adapter le fonctionnement de la montre selon la présente invention à ses propres besoins.

## Revendications

1. Montre de plongée électronique (1, 100) comportant un boîtier (2) étanche contenant un mouvement horloger surmonté d'un cadran (4), la montre comportant au moins des premières graduations (8, 9) correspondant à des indications horaires, ledit mouvement horloger comprenant des circuits électroniques (20) susceptible d'engendrer des signaux horaires à destination de moyens moteurs commandant respectivement au moins un premier (13) et un second (14) organes d'affichage analogiques, lesdits organes d'affichage analogiques étant disposés au-dessus du cadran (4) pour afficher l'heure courante dans un premier mode de fonctionnement dit mode horaire, la montre (1) comprenant en outre un capteur de pression (23) susceptible de produire des signaux électriques représentatifs de la pression environnante et de fournir lesdits signaux auxdits circuits électroniques (20), la montre de plongée ayant au moins un second mode de fonctionnement dans lequel est prévu un affichage de données relatives à la pratique de la plongée, **caractérisée en ce que** l'affichage desdites données relatives à la pratique de la plongée est réalisé par au moins l'un desdits organes d'affichage (13, 14) en liaison avec lesdites premières graduations correspondant aux indications horaires (8, 9), **en ce que** lesdites données relatives à la plongée sont représentatives de la durée maximale restante pendant laquelle l'utilisateur de la montre peut poursuivre une plongée en cours avant de devoir effectuer un palier de décompression lors de la remontée et, **en ce que** ledit premier organe d'affichage (13) est agencé pour pouvoir en outre se déplacer dans le sens anti-horaire en regard desdites premières graduations (8, 9) pour indiquer ladite durée restante.

2. Montre de plongée (100) selon la revendication 1, **caractérisée en ce que** lesdits circuits électroniques (20) comprennent des moyens permettant de définir un palier unique à effectuer par l'utilisateur en cas de dépassement de ladite durée maximale restante et, de commander ledit premier organe d'affichage (13) de telle manière que ce dernier affiche la durée dudit palier en regard de secondes graduations (102).

3. Montre de plongée (1, 100) selon la revendication 1 ou 2, **caractérisée en ce que** lesdites données relatives à la pratique de la plongée sont en outre représentatives de la profondeur instantanée, l'affichage de la profondeur instantanée étant réalisé par ledit second organe d'affichage (14) en liaison avec lesdites premières graduations (8, 9) et, **en ce que** ledit second organe d'affichage (14) est également agencé pour pouvoir se déplacer dans le sens anti-horaire.

4. Montre de plongée (1, 100) selon l'une des revendications 1 à 3, **caractérisée en ce que** le cadran (4) comporte des secondes graduations dont l'unité est la minute et divisées en au moins une première (10, 101) et une seconde (11, 102) zones d'apparences visuelles respectives différentes.

5. Montre de plongée (1) selon la revendication 4, **caractérisée en ce qu'**elle comporte en outre une troisième zone dans lesdites secondes graduations, la première zone (10) s'étendant préférablement, dans le sens anti-horaire, depuis la position correspondant à l'indication 59 minutes des premières graduations sur au moins deux tiers de tour de cadran (4) tandis que la seconde zone (11) est définie par le complément de ladite première zone jusqu'à la position correspondant à l'indication 1 minute des premières graduations et présente préférablement une couleur orange, ladite première zone (10) étant de couleur différente, la troisième zone étant comprise entre les positions correspondant respectivement aux indications 1 minute et 59 minutes des premières graduations, présentant préférablement une troisième couleur et, servant à l'indication, en relation avec ledit premier organe d'affichage (13), du fait que la durée maximale restante a atteint une valeur nulle.

6. Montre de plongée (1) selon l'une quelconque des revendications précédentes, **caractérisée en ce que** l'affichage d'un compte à rebours de durée prédéfinie, préférablement de l'ordre de 3 minutes, est réalisé par ledit premier organe, ou aiguille des heures (13), de manière automatique et en liaison avec lesdites premières graduations (8, 9), lorsque l'utilisateur remonte jusqu'à une profondeur prédéfinie, préférablement de l'ordre de 5 mètres.

7. Montre de plongée (100) selon la revendication 4, **caractérisée en ce que** la première zone (101) s'étend préférablement, dans le sens horaire, depuis la position correspondant à l'indication 59 minutes des premières graduations sur au moins trois quarts de tour de cadran (4) et indique en relation avec l'aiguille des heures (13) la durée maximale restante avant de devoir effectuer un palier de décompression, à partir du moment où cette dernière est inférieure à la durée indiquée à la fin de la première zone (101), tandis que la seconde zone (102) est définie par le complément de ladite première zone (101) sur un tour complet, la seconde zone (102) comportant une échelle de graduations supplémentaire (105) dont l'unité est la minute indiquant, en relation avec l'aiguille des heures (13), la durée d'un palier unique à effectuer par l'utilisateur à une profondeur prédéfinie en cas de dépassement de ladite durée maximale restante.

8. Montre de plongée (100) selon la revendication 7, **caractérisée en ce que** les secondes graduations comportent une troisième zone (103), préférablement de couleur verte, centrée sur la position douze heures et s'étendant sur moins de quatre minutes, les extrémités correspondantes desdites deux premières zones (101, 102) étant décalées en conséquence, ladite troisième zone (103) permettant d'indiquer, en relation avec l'aiguille des heures (13), que le palier de décompression à effectuer est terminé et que l'utilisateur de la montre peut refaire surface en toute sécurité.

9. Montre de plongée selon l'une quelconque des revendications précédentes, **caractérisée en ce qu'**elle comporte au moins un organe de commande (7) dont les mouvements sont détectés par lesdits circuits électroniques (20), et **en ce que** des moyens sont prévus pour qu'en mode de fonctionnement plongée, en réponse à une pression sur ledit organe de commande (7), un affichage de la durée écoulée de la plongée en cours est réalisé par ledit premier organe (13) tandis qu'un affichage de la profondeur maximale atteinte lors de la plongée en cours est réalisé par ledit second organe (14) d'affichage.

10. Montre de plongée selon l'une quelconque des revendications précédentes, **caractérisée en ce qu'**elle comporte des moyens de mémorisation et au moins un organe de commande (7) dont les mouvements sont détectés par lesdits circuits électroniques (20) et, **en ce que** en réponse à une première pression sur ledit organe de commande (7) à partir du mode de fonctionnement horaire, un affichage de la durée totale de la dernière plongée effectuée est réalisé par ledit premier organe d'affichage (13) tandis qu'un affichage de la profondeur maximale atteinte par l'utilisateur lors de ladite dernière plongée est réalisé par ledit second organe d'affichage (14), en liaison avec lesdites premières graduations (8, 9).

11. Montre de plongée selon la revendication 10, **caractérisée en ce que** des moyens sont prévus pour qu'en réponse à une séquence de pressions prédéfinie sur ledit organe de commande (7), un troisième mode de fonctionnement ou mode de démonstration est susceptible d'être activé, dans lequel chacun desdits organes d'affichages (13, 14) reproduit son comportement de la dernière plongée avec des échelles de temps et de profondeur adaptées aux paramètres de la dernière plongée.

12. Montre de plongée selon la revendication 11, **caractérisée en ce qu'**il est prévu, dans le cas de plongées dont la profondeur maximale atteinte ne dépasse pas 6 mètres, de reproduire le comportement du second organe d'affichage (14) dans le mode de démonstration de telle manière que les indications fournies par les premières graduations correspondent à dix fois la profondeur effectivement indiquée par ledit second organe d'affichage (14).

13. Montre de plongée selon l'une des revendications 10 à 12, **caractérisée en ce que** lesdits moyens de mémorisation sont susceptibles de mémoriser les mesures effectuées au moins au cours des deux dernières plongées en classant ces dernières par rang chronologique et **en ce que** des moyens supplémentaires sont prévus pour que, préalablement à l'affichage desdites mesures, les organes d'affichage (13, 14) se superposent en regard des premières graduations (8, 9) pour indiquer le rang de la plongée correspondante, une action sur ledit organe de commande (7) permettant de passer d'une plongée à une autre.

14. Montre de plongée selon l'une quelconque des revendications précédentes, **caractérisée en ce que** des moyens sont prévus pour détecter le début d'une plongée et activer automatiquement le mode plongée.

15. Procédé d'affichage de données relatives à la pratique de la plongée dans une montre de plongée (1) comportant un boîtier (2) étanche contenant un mouvement horloger surmonté d'un cadran (4), la montre comportant au moins des premières graduations (8, 9) correspondant à des indications horaires, ledit mouvement horloger comprenant des circuits électroniques (20) susceptible d'engendrer des signaux horaires à destination de moyens moteurs commandant respectivement au moins un premier (13) et un second (14) organes d'affichage analogiques, lesdits organes d'affichage analogiques étant disposés au-dessus du cadran (4) pour afficher l'heure courante dans un premier mode de fonctionnement dit mode horaire, la montre (1) comprenant en outre un capteur de pression (23) susceptible de produire des signaux électriques représentatifs de la pression environnante et de fournir lesdits signaux auxdits circuits électroniques (20), la montre de plongée comportant au moins un second mode de fonctionnement dans lequel est prévu un affichage de données relatives à la pratique de la plongée, **caractérisée en ce que** lesdites données relatives à la plongée sont représentatives de la durée maximale restante pendant laquelle l'utilisateur de la montre peut poursuivre une plongée en cours avant de devoir effectuer un palier de décompression lors de la remontée, **en ce que** lesdits premier et second organes d'affichage sont des aiguilles respectivement indicatrices des heures (13) et des minutes (14) dans le mode de fonctionnement horaire, **en ce que** lesdites premières graduations (8, 9) comportent notamment des indications de minutes, **en ce qu'**au passage en mode plongée l'aiguille des heures (13) se positionne initialement sur une position prédéfinie, et **en ce que**, à partir du moment où ladite durée maximale restante devient inférieure à la durée correspondant à ladite position prédéfinie, ladite aiguille des heures (13) se met en rotation, initialement dans le sens anti-horaire, de manière à afficher ladite durée restante à chaque instant, en liaison avec lesdites premières graduations (8, 9).

16. Procédé d'affichage selon la revendication 15, **caractérisé en ce que**, après que ladite durée maximale restante ait atteint une valeur nulle, ladite aiguille des heures (13) affiche la durée d'un palier de décompression à effectuer à une profondeur prédéfinie lors de la remontée, en liaison avec des graduations supplémentaires (102).

## Claims

1. An electronic diving watch (1, 100) comprising a sealed case (2) containing a timepiece movement covered by a dial (4), the watch comprising at least first graduations (8, 9) corresponding to time indications, said timepiece movement comprising electronic circuits (20) adapted to generate time signals for motor means controlling at least respective first (13) and second (14) analog display organs, said analog display organs being disposed above the dial (4) to display the current time in a first mode of operation called the time mode, the watch (1) further comprising a pressure sensor (23) adapted to produce electric signals representing the surrounding pressure and to supply said signals to said electronic circuits (20), the diving watch having at least a second mode of operation in which display of data relating to the performance of diving is provided, **characterized in that** the display of said data relating to the performance of diving is effected by at least one of said display organs (13, 14) in connection with said first graduations corresponding to the time indications (8, 9), **in that** said data relating to the diving are representative of the maximum remaining duration during which the user of the watch can continue with a current dive before needing to perform a decompressing stage during the ascent, and **in that** said first display organ (13) is further arranged to be able to move in the anticlockwise sense relative said first graduations (8, 9) to indicate said remaining duration.

2. A diving watch (100) according to claim 1, **characterized in that** said electronic circuits (20) comprise means allowing a single stage to be defined to be effected by the user in the event of exceeding said maximum remaining duration and to control the first display organ (13) in such a manner that this latter displays the duration of said stage with respect to second graduations (102).

3. A diving watch (1, 100) according to claim 1 or 2, **characterized in that** said data relating to the performance of diving are further representative of the instantaneous depth, the display of the instantaneous depth being effected by said second display organ (14) in connection with said first graduations (8, 9) and **in that** said second display organ (14) is also arranged to be able to move in the anticlockwise sense.

4. A diving watch (1, 100) according to any of claims 1 to 3, **characterized in that** the dial (4) has second graduations whose unit is the minute and which is divided into at least a first (10, 101) and a second (11, 102) zone with different respective visual appearances.

5. A diving watch (1) according to claim 4, **characterized in that** it further comprises a third zone in said second graduations, the first zone (10) preferably extending in the anticlockwise sense from the position corresponding to the indication 59 minutes of the first graduations over at least two thirds of the circumference of the dial (4) while the second zone (11) is defined by the complement of said first zone up to the position corresponding to the indication 1 minute of the first graduations and preferably having the colour orange, said first zone (10) being of a different colour, the third zone being comprised between the positions corresponding respectively to the indications 1 minute and 59 minutes of the first graduations, preferably exhibiting a third colour and serving to indicate in relation to said first display organ (13) that the maximum remaining duration has attained a value of zero.

6. A diving watch (1) according to any of the preceding claims, **characterized in that** the display of a countdown of predetermined duration, preferably of the order of 3 minutes, is realised by said first organ or hour hand (13), in an automatic manner and in connection with said first graduations (8, 9), when the user ascends to a predetermined depth, preferably of the order of 5 meters.

7. A diving watch (100) according to claim 4, **characterized in that** the first zone (101) preferably extends, in the clockwise sense, from the position corresponding to the indication 59 minutes of the first graduations over at least three quarters of the circumference of the dial (4) and indicates in connection with the hour hand (13) the maximum remaining duration before having to perform a decompression stage, starting from the moment when the maximum remaining duration is less than the duration indicated at the end of the first zone (101), while the second zone (102) is defined by the complement of said first zone (101) over a complete circumference, the second zone (102) comprising a scale of supplementary graduations (105) whose unit is the minute, indicating in connection with the hour hand (13) the duration of a single stage to be effected by the user at a predetermined depth in case of exceeding said maximum remaining duration.

8. A diving watch (100) according to claim 7, **characterized in that** the second graduations comprise a third zone (103), preferably of green colour, centred on the twelve hour position and extending over less than four minutes, the corresponding ends of said two first zones (101, 102) being offset in consequence, said third zone (103) allowing indication, in relation to the hour hand (13) that the decompression stage to be effected has ended and that the user of the watch may start to resurface in complete safety.

9. A diving watch according to any of the preceding claims, **characterized in that** it comprises at least one control member (7) whose movements are detected by said electronic circuits (20) and **in that** means are provided such that, in the diving mode of operation, a display of the elapsed duration of the current dive is given by said first organ (13) in response to actuation said control member (7) while a display of the maximum depth attained during the current dive is given by said second display organ (14).

10. A diving watch according to any of the preceding claims, **characterized in that** it comprises memory means and at least one control member (7) whose movements are detected by said electronic circuits (20), and **in that** a display of the total duration of the last effected dive is given by said first display organ (13) in response to first actuation of said control member (7) during the time mode of operation, while a display of the maximum depth attained by the user during said last dive is given by said second display organ (14) in connection with said first graduations (8, 9).

11. A diving watch according to claim 10, **characterized in that** means are provided such that a third mode of operation or historical mode is adapted to be activated in response to a predetermined sequence of actuations of said control member (7), in which mode each of said display organs (13, 14) reproduces its behaviour in the last dive with scales of time and depth adapted to the parameters of the last dive.

12. A diving watch according to claim 11, **characterized in that** it is provided that, in the case of dives whose maximum depth attained does not exceed 6 meters, the behaviour of the second display organ (14) is reproduced in the historical mode in such a manner that the indications provided by the first graduations correspond to ten times the depth effectively indicated by said second display organ (14).

13. A diving watch according to any of claims 10 to 12, **characterized in that** said memory means are adapted to store the measurements effected at least in the course of the last two dives, sorting these in chronological rank, and **in that** supplementary means are provided such that, prior to the display of said measurements, the display organs (13, 14) are superposed opposite the first graduations (8, 9) to indicate the rank of the corresponding dive, action on said control member (7) enabling passage from one dive to another.

14. A diving watch according to any of the preceding claims, **characterized in that** means are provided to detect the start of a dive and to activate the diving mode automatically.

15. A method of displaying data relating to the practice of diving on a diving watch (1) comprising a sealed case (2) containing a timepiece movement covered by a dial (4), the watch comprising at least first graduations (8, 9) corresponding to time indications, said timepiece movement comprising electronic circuits (20) adapted to generate time signals for motor means controlling respectively at least a first (13) and a second (14) analog display organ, said analog display organs being disposed above the dial (4) to display the current time in a first mode of operation called the time mode, the watch (1) further comprising a pressure sensor (23) adapted to produce electric signals representing the surrounding pressure and to provide said signals to said electronic circuits (20), the diving watch comprising at least a second mode of operation in which a display of data relating to the practise of diving is provided, **characterized in that** said data relating to diving represent the maximum remaining duration during which the user of the watch can continue a current dive before having to effect a decompression stage during the ascent, and **in that** said first and second organs are hands respectively indicating hours (13) and minutes (14) in the time mode of operation, and **in that** said first graduations (8, 9) comprise in particular minute indications and **in that**, on passing to the diving mode, the hour hand (13) is positioned initially at a predetermined position and **in that**, from the moment when said maximum remaining duration becomes less than the duration corresponding to said predetermined position, said hour hand (13) starts to rotate, initially in the anticlockwise sense, in such a manner as to display said remaining duration at each instant, in connection with said first graduations (8, 9).

16. A display method according to claim 15, **characterized in that,** after said maximum remaining duration has reached a value of zero, said hour hand (13) displays the duration of a decompression stage to be effected at a predetermined depth during the ascent, in connection with supplementary graduations (102).

## Patentansprüche

1. Elektronische Taucheruhr (1,100) beinhaltend ein wasserdichtes Gehäuse (2), das ein Uhrwerk enthält, auf dem ein Zifferblatt (4) angebracht ist, wobei die Uhr wenigstens erste Graduierungen (8,9), die Zeitanzeigen entsprechen, beinhaltet, wobei das Uhrwerk elektronische Schaltungen (20) umfasst, die Zeitsignale für Motormittel erzeugen können, die jeweils wenigstens ein erstes (13) und ein zweites (14) analoges Anzeigeorgan steuern, wobei die besagten analogen Anzeigeorgane über dem Zifferblatt (4) angeordnet sind, um die aktuelle Zeit in einem ersten Modus, die als Zeitmodus bezeichnet wird, anzuzeigen, wobei die Uhr (1) zudem einen Drucksensor (23) umfasst, der elektrische Signale erzeugen kann, welche repräsentativ für den umgebenden Druck sind, und um die besagten Signalen an die besagten elektronischen Schaltungen (20) zu liefern, wobei die Taucheruhr wenigstens einen zweiten Modus hat, in welchem eine Datenanzeige für Daten, die auf Tauchaktivitäten bezogen sind, vorgesehen ist, **dadurch gekennzeichnet, dass** die Anzeige der besagten auf das Tauchen bezogenen Daten durch wenigstens eines der Anzeigeorgane (13,14) in Bezug auf die besagten ersten Graduierungen (8,9), die Zeitanzeigen entsprechen, durchgeführt wird; dass die auf das Tauchen bezogenen Daten repräsentativ für die maximale verbleibende Zeitspanne sind, während welcher der Benutzer der Uhr einen momentanen Tauchgang weiterführen darf, bevor er eine Druckausgleichspause während des Wiederaufstiegs durchführen muss, und dass das erste Anzeigeorgan (13) so gebaut ist, das es sich gegen den Uhrzeigersinn gegenüber den ersten Graduierungen (8,9) bewegen kann, um die besagte verbleibende Zeitspanne anzuzeigen.

2. Taucheruhr (100) gemäss Anspruch 1, **dadurch gekennzeichnet, dass** die besagten elektronischen Schaltungen (20) Mittel umfassen, die es erlauben, eine einzige Pause zu definieren, die von dem Benutzer im Falle eines Überschreitens der besagten maximalen verbleibenden Zeitspanne durchzuführen ist, und die das besagte erste Anzeigeorgan (13) antreiben, so dass es die Dauer der besagten Pause gegenüber den zweiten Graduierungen (102) anzeigt.

3. Taucheruhr (1,100) gemäss Anspruch 1 oder 2, **dadurch gekennzeichnet, dass** die auf das Tauchen bezogenen Daten ferner repräsentativ für die aktuelle Tiefe sind, wobei die Anzeige der aktuellen Tiefe durch das zweite Anzeigeorgan (14) realisiert wird, in Bezug auf die ersten Graduierungen (8,9), und dass das zweite Anzeigeorgan auch so ausgebildet ist, dass es sich gegen den Uhrzeigersinn bewegen kann.

4. Taucheruhr gemäss einem der Ansprüche 1 bis 3, **dadurch gekennzeichnet, dass** das Zifferblatt (4) zweite Graduierungen umfasst, deren Messeinheit die Minute ist, und die in wenigstens eine erste (10,101) und eine zweite (11,102) Zone, mit jeweils verschiedenem Aussehen, aufgeteilt sind.

5. Taucheruhr gemäss Anspruch 4, **dadurch gekennzeichnet, dass** sie eine dritte Zone in den besagten zweiten Graduierungen umfasst, wobei die erste Zone (10) sich vorzugsweise gegen den Uhrzeigersinn von der Position entsprechend der Anzeige 59 Minuten der ersten Graduierungen auf wenigstens zwei Drittel des Umfangs des Zifferblatts erstreckt, wohingegen die zweite Zone (11) durch das Komplement der besagten ersten Zone bis zu der Position entsprechend der Anzeige 1 Minute der ersten Graduierungen definiert ist und vorzugsweise orange gefärbt ist, wobei die erste Zone eine andere Farbe hat, wobei die dritte Zone zwischen den Positionen liegt, die jeweils der Anzeige 1 Minute und 59 Minuten der ersten Graduierungen entsprechen, und vorzugsweise eine dritte Farbe aufweist, und dazu dient, die Tatsache anzuzeigen, dass die verbleibende maximale Zeitspanne den Nullwert erreicht hat, in Bezug auf das erste Anzeigeorgan (13).

6. Taucheruhr gemäss einem der vorigen Ansprüche, **dadurch gekennzeichnet, dass** die Anzeige eines Countdowns einer vordefinierten Dauer, vorzugsweise einer Grössenordnung von 3 Minuten, durch das besagte erste Anzeigeorgan, oder Stundenanzeiger (13), automatisch und in Bezug auf die besagten ersten Graduierungen (8,9) realisiert wird, wenn der Benutzer bis auf eine vordefinierte Tiefe , vorzugsweise von einer Grössenordnung von 5 Metern, aufsteigt.

7. Taucheruhr gemäss Anspruch 4, **dadurch gekennzeichnet, dass** die erste Zone (101) sich vorzugsweise im Uhrzeigersinn von der Position, die der Anzeige 59 Minuten der ersten Graduierungen entspricht, auf wenigstens drei Viertel des Umfangs des Zifferblatts erstreckt, und in Bezug auf die Stundenanzeige (13) die maximal verbleibende Zeitspanne bis eine Druckausgleichspause gemacht werden muss angibt, sobald diese Dauer geringer als die am Ende der ersten Zone (101) angegebene Dauer ist, wohingegen die zweite Zone (102) durch das Komplement der besagten ersten Zone zu einer gesamten Umdrehung definiert ist, wobei die zweite Zone (102) eine zusätzliche Graduierungsskala (105) umfasst, deren Messeinheit die Minute ist, und die, in Bezug auf die Stundenanzeige (13), die Dauer einer einzelnen Druckausgleichspause angibt, die von dem Benutzer im Falle eines Überschreitens der besagten maximal verbleibenden Dauer durchzuführen ist.

8. Taucheruhr gemäss Anspruch 7, **dadurch gekennzeichnet, dass** die zweiten Graduierungen eine dritte Zone (103) umfassen, vorzugsweise in grüner Farbe, die auf die 12-Uhr Position zentriert ist, und die sich auf weniger als 4 Minuten erstreckt, wobei die entsprechenden Ende der besagten zwei ersten Zonen (101,102) dementsprechend verschoben sind, wobei die dritte Zone (103) es erlaubt anzugeben, dass die durchzuführende Druckausgleichspause beendet ist, und dass der Benutzer der Uhr in völliger Sicherheit wieder auftauchen kann.

9. Taucheruhr gemäss einem der vorigen Ansprüche, **dadurch gekennzeichnet, dass** sie wenigstens ein Steuerorgan (7) umfasst, dessen Bewegungen durch die besagten elektronischen Schaltungen (20) detektiert werden, und dass Mittel vorgesehen sind, so dass, in dem Tauchmodus und als Antwort auf ein Drücken auf das besagte Steuerorgan (7), eine Anzeige der vergangenen Tauchzeit durch das besagte erste Organ (13) realisiert wird, während eine Anzeige der maximal erreichten Tiefe während des aktuellen Tauchgangs durch das zweite Anzeigeorgan (14) realisiert wird.

10. Taucheruhr gemäss einem der vorigen Ansprüche, **dadurch gekennzeichnet, dass** sie Speichermittel und wenigstens ein Steuerorgan (7) beinhaltet, dessen Bewegungen von den besagten elektronischen Schaltungen (20) detektiert werden, und dass, als Antwort auf ein Drücken auf das besagte Steuerorgan (7) in dem Zeitmodus, eine Anzeige der Gesamtdauer des letzten durchgeführten Tauchgangs durch das erste Anzeigeorgan (13) realisiert wird, während eine Anzeige der maximal von dem Benutzer erreichten Tiefe während des aktuellen Tauchgangs durch das zweite Anzeigeorgan (14) realisiert wird, in Bezug auf die besagten ersten Graduierungen (8,9).

11. Taucheruhr gemäss Anspruch 10, **dadurch gekennzeichnet, dass** Mittel vorgesehen sind, so dass eine dritter Modus oder sogenannter Demonstrationsmodus als Antwort auf eine Sequenz von vordefinierten Drücken auf das Steuerorgan (7) aktiviert werden kann, in welchem jedes besagte Anzeigeorgan (13,14) sein Verhalten des letzten Tauchgangs mit an die Parameter des letzten Tauchgangs angepasster Zeit- und Tiefskala, wiedergibt.

12. Taucheruhr gemäss Anspruch 11, **dadurch gekennzeichnet, dass** es vorgesehen ist, im Fall von Tauchgängen, deren maximal erreichte Tiefe 6 Meter nicht überschreitet, das Verhalten des zweiten Anzeigeorgans (14) in dem Demonstrationsmodus so wiederzugeben, dass die von den ersten Graduierungen gelieferten Angaben zehn mal der tatsächlich von dem zweiten Anzeigenorgan (14) angegebenen Tiefe entsprechen.

13. Taucheruhr gemäss einem der Ansprüche 10 bis 12, **dadurch gekennzeichnet, dass** die Speichermittel Messungen speichern können, die wenigstens während der zwei letzten Tauchgänge durchgeführt worden sind, indem sie die Messungen in chronologischer Reihenfolge ablegen, und dass zusätzliche Mittel vorgesehen sind, damit, vor der Anzeige der besagten Messungen, die Anzeigeorgane (13,14) sich gegenüber der ersten Graduierungen (8,9) aufeinanderlegen, um den Rang des entsprechenden Tauchgangs anzugeben, wobei eine Betätigung des Steuerorgans (7) von einem Tauchgang zu dem anderen springen lässt.

14. Taucheruhr gemäss einem der vorigen Ansprüche, **dadurch gekennzeichnet, dass** Mittel vorgesehen sind, um automatisch den Start eines Tauchgangs zu detektieren, und automatisch den Tauchmodus einzuschalten.

15. Anzeigeverfahren, um Daten bezüglich Tauchaktivitäten anzuzeigen, in einer Taucheruhr (1,100) beinhaltend ein wasserdichtes Gehäuse (2), das ein Uhrwerk enthält, auf dem ein Zifferblatt (4) angebracht ist, wobei die Uhr wenigstens erste Graduierungen (8,9) umfasst, die Zeitanzeigen entsprechen, wobei das Uhrwerk elektronische Schaltungen (20) umfasst, die Zeitsignale für Motormittel erzeugen können, die jeweils wenigstens ein erstes (13) und ein zweites (14) analoges Anzeigeorgan steuern, wobei die besagten analogen Anzeigeorgane über dem Zifferblatt (4) angeordnet sind, um die aktuelle Zeit in einem ersten Modus, der als Zeitmodus bezeichnet wird, anzuzeigen, wobei die Uhr (1) ferner einen Drucksensor (23) umfasst, der elektrische Signale erzeugen kann, welche repräsentativ für den umgebenden Druck sind, und um die besagten Signale an die besagten elektronischen Schaltungen (20) zu liefern, wobei die Taucheruhr wenigstens einen zweiten Modus hat, in welchem eine Datenanzeige für Daten, die auf Tauchaktivitäten bezogen sind, vorgesehen ist, **dadurch gekennzeichnet, dass** die auf das Tauchen bezogenen Daten repräsentativ für die maximal verbleibende Zeitspanne sind, während welcher der Uhrbenutzer einen momentanen Tauchgang weiterführen darf, bevor er eine Druckausgleichspause während des Wiederaufstiegs durchführen muss, dass die besagten erste und zweite Anzeigeorgane Stunden- (13) bzw. Minutenzeiger (14) in dem Zeitmodus sind, dass die besagten ersten Graduierungen (8,9) insbesondere Minutenangaben beinhalten, dass der Stundenzeiger sich bei dem Wechsel in den Tauchmodus zu Beginn auf einer vordefinierten Position positioniert, und dass, sobald die maximal verbleibende Zeitspanne kleiner als die Zeitspanne entsprechend der vordefinierten Position wird, der Stundenzeiger (13) anfängt sich zu drehen, zu Beginn gegen den Uhrzeigersinn, so dass die besagte verbleibende Zeitspanne gegenüber der ersten Graduierungen (8,9) jederzeit angezeigt wird.

16. Anzeigeverfahren gemäss Anspruch 15, **dadurch gekennzeichnet, dass** der besagte Stundenzeiger (13) die Dauer einer Druckausgleichspause, die auf einer vordefinierten Tiefe beim Wiederaufstieg durchgeführt werden muss, in Bezug auf weitere Graduierungen (102) anzeigt, nachdem die besagte maximal verbleibende Zeitspanne den Wert Null erreicht hat
